# EUROPEAN PATENT SPECIFICATION

(11) **EP 2 060 113 B1**
(45) Date of publication and mention of the grant of the patent: **14.02.2018**
(21) Application number: 07808064.5
(22) Date of filing: 05.09.2007
(51) Int. Cl.: H04L 25/03, H04L 1/00, H04H 40/18, H04H 40/90

(54) **EQUALIZER AND EQUALIZING METHOD**
ENTZERRER UND ENTZERRUNGSVERFAHREN
ÉGALISATEUR ET PROCÉDÉ D'ÉGALISATION

(30) Priority: 05.09.2006 KR 20060084980
(43) Date of publication of application: 20.05.2009
(73) Proprietor: SK Telecom Co., Ltd., Seoul 100-999 (KR)
(72) Inventor: LEE, Dong Hahk, Gyeonggi-do, 463-904 (KR); LEE, Sung Hoon, Seoul, 138-040 (KR); LEE, Goon Seop, Gyeonggi-do, 463-010 (KR); IHM, Jong Tae, Gyeonggi-do, 463-060 (KR); SON, Kyo Hoon, Seoul, 138-711 (KR); HAN, Jin Hee, Seoul, 138-711 (KR); YU, Jae Hwang, Seoul, 135-239 (KR)
(74) Representative: Noble, Nicholas
(86) International application number: PCT/KR2007/004270
(87) International publication number: WO 2008/030031

(56) References cited:
- JP-A- 2004 153 578
- KR-A- 20000 007 903
- KR-A- 20010 055 964
- KR-A-020040 008 081
- US-A1- 2004 057 512
- US-A1- 2006 067 383
- US-B1- 6 587 504

## Description

### Technical Field

The present invention relates to a communication system. More particularly, the present invention relates to an equalizer and an equalizing method wherein tap co-efficients are converged at a high speed according to the profile of a received signal.

### Background Art

In recent years, as user's needs for high-quality audio and video services are increased, the commercialization of a digital broadcasting service is extended. The digital broadcasting can be classified into satellite broadcasting and terrestrial broadcasting.

For the satellite digital broadcasting, a satellite base station receives broadcasting data from each broadcasting station and transmits it to a satellite through an uplink transmission path of a designated band, and the satellite amplifies and frequency-converts the signal received from the satellite base station and sends it toward a service area.

Thereby, a receiver in a satellite broadcasting service area receives the broadcasting signal from the satellite and plays video and/or audio of the broadcasting. Meanwhile, in order to solve a problem in which the signal is attenuated due to shadowing or blocking resulting from a building or shielding object, a gap filler is used to relay the broadcasting signal.

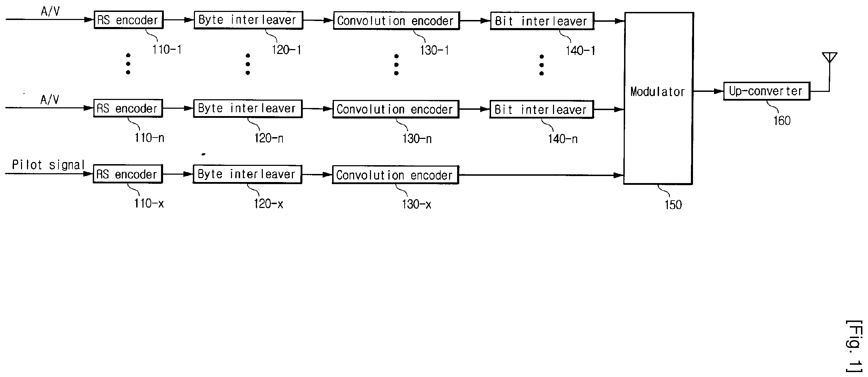

Fig. 1 shows a structure of a general satellite broadcasting transmission system.

As shown, a satellite broadcasting transmission system comprises Reed-Solomon (RS) encoders 110-1∼110-n, byte interleavers 120-1∼120-n, convolutions encoders 130-1∼130-n, and bit interleavers 140-1∼140-n, which are parts for encoding an audio/ video (AV) signal. The satellite broadcasting transmission system also comprises an RS encoder 110-x, a byte interleaver 120-x, and a convolution encoder 130x, which are parts for encoding a pilot signal that is a control signal. The satellite broadcasting transmission system also comprises a modulator 150 for modulating the encoded AV signal and a pilot signal, and an up-converter 160 for performing a frequency up-conversion to send a broadcasting signal through an antenna.

In such transmission system, in order to allow an independent broadcasting for each broadcasting station and/or content, the broadcasting signal is transmitted using different orthogonal spread codes, and a receiving system uses a Walsh code so as to distinguish the different broadcasting/contents signals.

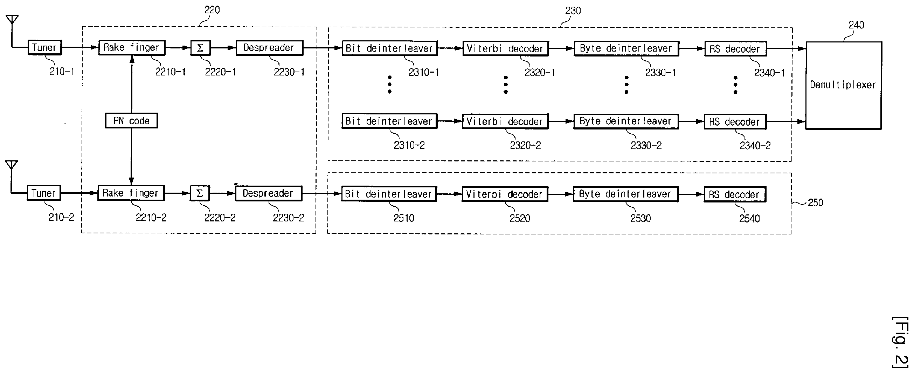

Fig. 2 shows a structure of a general satellite broadcasting receiving system.

A satellite broadcasting receiving system comprises tuners 210-1-210-2, a CDM (Code Division Multiplexing) demodulation section 220, a channel demodulation section 230, a demultiplexer 240, and a pilot channel demodulation section 250.

The CDM demodulation section 220 comprises a plurality of Rake fingers 2210-1∼2210-2 that receive a broadcasting signal in accordance with a PN code, adders 2220-1-2220-2 that outputs signals from the signals received through the Rake fingers 2210-1-2210-2 in accordance with signal intensity and delay, and despreaders 2230-1∼2230-2 that despread the output signals from the adders 2220-1-2220-2 using the Walsh code. The output signals of the CDMA demodulation section 220 are divided into a broadcasting channel signal and a pilot channel signal. The broadcasting channel signal is decoded in the channel demodulation section 230, and the pilot channel signal is decoded in the pilot channel demodulation section 250.

To this end, the channel demodulation section 230 comprises bit deinterleavers 2310-1∼2310-2, viterbi decoders 2320-1-2320-2, byte deinterleavers 2330-1-2330-2, and RS decoders 2340-1-2340-2. The pilot channel demodulation section 250 comprises a viterbi decoder 2510, a byte deinterleaver 2520, an RS decoder 2530, and a receiver controller 2540.

Furthermore, the signal that is restored into an audio signal and a video signal in the channel demodulation section 230 is demuliplexed in the demultiplexer 240 and played.

The current satellite broadcasting receiving system has a problem in that the Walsh code orthogonality of the received signal is lost due to the delay of the received signal and the frequency spreading in the multi-path channel environment, and there may thus occur a multi-channel interference and a desired broadcasting signal cannot be correctly restored. The problems can be overcome in a manner of decreasing the interference signal. However, in this case, the broadcasting service channel is limited.

Accordingly, there has been researched a method of minimizing the interference between the received signals while not limiting the broadcasting channel. As one solution, there is a method of introducing an equalizer to a receiving system.

Equalization is a technology for compensating distortion and interference over a channel so that heavily distorted signals from a transmitting end can have the uniform amplitude and phase properties across the entire frequency band. For the compensation of intersymbol interference, a typical equalizer uses a fixed delay line with multiple taps to adjust tap coefficients according to delay attributes of an input signal. Tap co-efficients may vary according to the channel estimation information and are determined by noise signals distributed at delay positions around main data signals, i.e., delay signals. In other words, a tap coefficient value is set to get rid of noise signals.

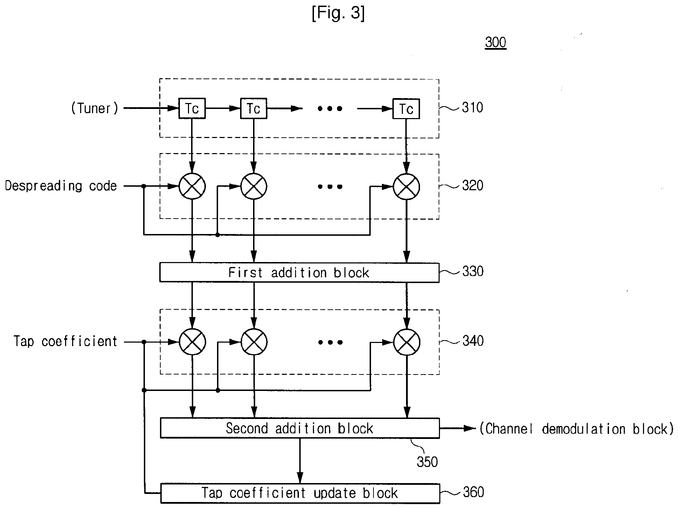

FIG. 3 is a drawing for explaining a receiving system comprising the conventional equalizer.

As shown, an equalizer 300 comprises a unit delay block 310 delaying a broadcast signal received by a tuner at chip intervals; a first multiplication block 320 applying a dispreading code to each of output signals from the respective output ends of the unit delay block 310; a first addition block 330 adding up all multiplication results of the first multiplication block 320 to calculate a restored pilot signal including channel information; a second multiplication block 340 applying a tap coefficient to each of the signal added at the first addition block 330; a second addition block 350 adding up all multiplication results of the second multiplication block 340 to calculate a bit signal and provide it to a channel demodulation block; and a tap coefficient update block 360 updating tap coefficients by step sizes that are obtained based on the calculated bit signal and a predetermined method.

In such a configuration, taps of the unit delay block 310 are fixed in their positions, and tap coefficients to be multiplied by input signals from the respective taps are set to specific values through a certain amount of time for arithmetic process. This process is called a tap coefficient convergence process. Once tap coefficients are converged, they maintain their values unless delay properties of an input signal get changed. However, under the CDM multipath channel environment where channel environment changes suddenly, signals are very frequently generated, faded, and moved. Therefore, an input signal profile of a receiver changes continuously and the equalizer should update tap coefficients in order to maintain optimum performances for the input signal profile. As such, it takes long for tap coefficients to converge properly to a new channel profile, and the prolonged convergence time may degrade the signal receiving performance that much.

US2006/0067383 and US2004/0057512 describe equalisers that include estimated parameters or adaptive co-efficients.

### DISCLOSURE

### TECHNICAL PROBLEM

In view of foregoing problems and disadvantages, it is, therefore, an object of the present invention to provide an equalizer and an equalizing method for converging tap coefficients at high speed even if an input signal profile may change.

It is another object of the present invention to improve the performances of a receiver by converging tap coefficients equalizer at high speed.

Other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

### TECHNICAL SOLUTION

In accordance with an aspect of the present invention, there is provided an equalizer for a receiving system according to independent claim 1 and further detailed in dependent claims 2-4.

In addition, another aspect of the present invention provides an equalizing method according to independent claim 5 and further detailed in claim 6.

The present invention is defined and limited only by the scope of the appended claims. In the following, any embodiment(s) referred to and not falling within the scope of said appended claims is (are) to be interpreted as example(s) useful for understanding the present invention.

### ADVANTAGEOUS EFFECTS

A receiving system incorporating an equalizer of the present invention is capable of increasing the convergence speed of tap coefficients by adjusting their positions according to the position change of the received signal.

Moreover, with the high-speed convergence of tap coefficients, the receiving system demonstrates improvement in processing performances and speed.

### Brief Description of the Drawings

FIG. 1 is a schematic block diagram of a conventional satellite broadcast transmission system.
FIG. 2 is a schematic block diagram of a conventional satellite broadcast receiving system.
FIG. 3 is a diagram for explaining a receiving system provided with a conventional equalizer.
FIG. 4 is a schematic block diagram of an equalizer according to one embodiment of the present invention.
FIG. 5 is a detailed view of a coefficient position adjusting part shown in FIG. 4.
FIG. 6 is a flow chart explaining an equalizing method according to one embodiment of the present invention.

### Mode for the Invention

The advantages, features and aspects of the invention will become apparent from the following description of the embodiment with reference to the accompanying drawings, which is set forth hereinafter.

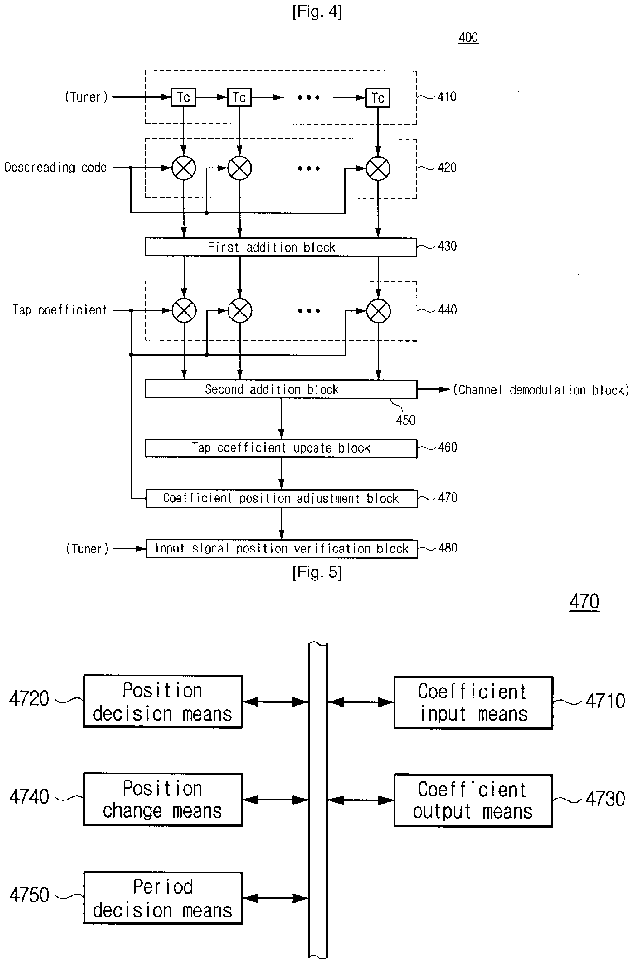

FIG. 4 is a schematic block diagram of an equalizer according to one embodiment of the present invention.

As shown, an equalizer 400 comprises a unit delay block 410 delaying a broadcast signal received by a tuner at chip intervals; a first multiplication block 420 applying a dispreading code to each of output signals from the respective output ends of the unit delay block 410; a first addition block 430 adding up all multiplication results of the first multiplication block 420 to calculate a restored pilot signal including channel information; a second multiplication block 440 applying a tap coefficient to each of the signal added at the first addition block 430; a second addition block 450 adding up all multiplication results of the second multiplication block 440 to calculate a bit signal and provide it to a channel demodulation block; a tap coefficient update block 460 updating tap coefficients by step sizes that are obtained based on the calculated bit signal and a predetermined method; an input signal position verification block 480 verifying the profile of a broadcast signal having been received by the tuner; and a coefficient position adjustment block 470 determining whether to adjust the position of the tap coefficient according to the received signal profile that has been verified by the input signal position verification block 480, and shifting and outputting a position adjusted tap coefficient if it is necessary to adjust the position of the tap coefficient.

In the equalizer 400 with the configuration described above, after a signal is initially received and tap coefficients converge, the input signal position verification block 480 verifies whether or not a signal profile being received has changed and provides the verification result to the coefficient position adjustment block 470.

Then, the coefficient position adjustment block 470 shifts the tap coefficient in a direction where the input signal position moves. If the input signal position did not move, the tap coefficients updated by the tap coefficient update block 460 are outputted as they are. On the other hand, if the input signal position moved in the right direction, the coefficient position adjustment block 470 shifts the tap coefficients in the right direction before outputting them. Also, if the input signal position moved in the left direction, the coefficient position adjustment block 470 shifts tap coefficients in the left direction before outputting them.

Needless to say, the amount of shift of a tap coefficient varies depending on how much a received signal moved.

FIG. 5 is a detailed view of a coefficient position adjustment block shown in FIG. 4.

As shown, the coefficient position adjustment block 470 includes a coefficient input means 4710, a position decision means 4720, a coefficient output means 4730, and a position change means 4740.

The coefficient input means 4710 receives an updated tap coefficient from the tap coefficient update block 460. The position decision means 4720 receives a verification result from the input signal position verification block 480 concerning whether the profile of a received signal has changed, and uses the result to decide whether the position of the received signal has moved.

If the received signal position has not changed, a tap coefficient received from the coefficient input means 4710 is outputted through the coefficient output means 4730, without undergoing a change in its position.

Meanwhile, if the received signal position has changed, a tap coefficient is shifted according to the change and outputted through the coefficient output means 4730, while reflecting the change situation. At this time, if a received signal moved to the right side, a tap coefficient is also shifted to the right side. Similarly, if a received signal moved to the left side, a tap coefficient is also shifted to the left side. The amount of shift is also determined adaptively to the degree of changes of the received signal.

The coefficient position adjustment block 470 may further include a period decision means 4750. In this case, the coefficient position adjustment block 470 is driven according to a system clock or a designated period to adjust the position of a tap coefficient.

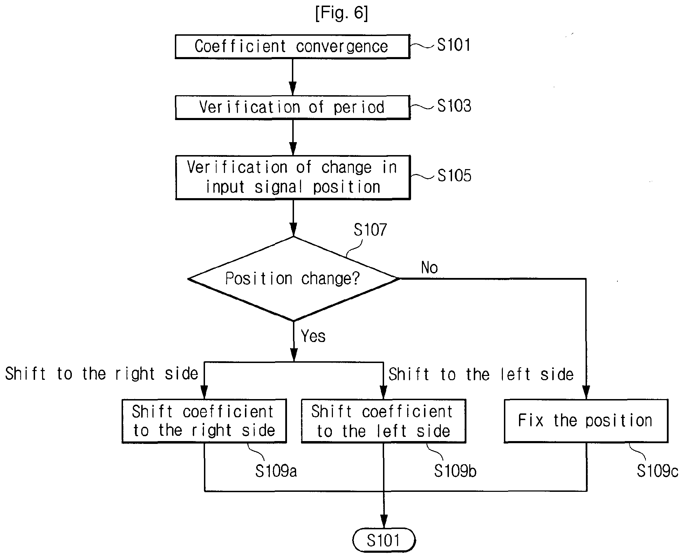

FIG. 6 is a flow chart explaining an equalizing method according to one embodiment of the present invention.

First of all, as broadcast signals start coming in through a tuner, the equalizer applies a dispreading code to each of the received signals delayed by tap unit, and adds them up. Then, the equalizer applies tap coefficients to the addition results and adds them up to converge the tap coefficients (S101).

Next, the coefficient position adjustment block 470 verifies a change in position of the received signal based on the received signal profile transmitted from the input s ignal position verification block 480 (S105). Preferably, this verification process is carried out per predetermined period (S103).

A decision is made regarding whether the position of the received signal has changed (S107). If the position has changed (e.g., Yes), the coefficient position adjustment block 470 shifts the coefficient inputted from the tap coefficient update block and outputs it (S109a and S109b). However, if it turned out that there is no change in the received signal position, the position of the coefficient is not changed but outputted as it is (S109c).

As explained earlier, when a received signal has moved to the right side, the coefficient position adjustment block 470 also shifts the coefficient to the right side before outputting it (S109a). In like manner, when a received signal has moved to the left side, the coefficient position adjustment block 470 also shifts the coefficient to the left side before outputting it (S109b)

For example, suppose that tap coefficients {C₀, C₁, C₂, ..., Cₙ₋₂, Cₙ₋₁} are inputted from the tap coefficient update block. And if the verification result in step S107 reflects that the received signal has moved to the right side, the coefficient position adjustment block 470 then shifts the tap coefficients such as {C₁, C₂, ..., Cₙ₋₂, Cₙ₋₁, 0} and output them. If the received signal has moved to the left side, the coefficient position adjustment block 470 then shifts the tap coefficients such as {0, C₀, C₁, C₂, ..., Cₙ₋₂} and output them. In case that the received signal position does not change, however, the tap coefficients {C₀, C₁, C₂, ..., Cₙ₋₂, Cₙ₋₁} are outputted as they are.

After the positions of the tap coefficients are adjusted, the coefficient convergence process (S101) for converging tap coefficients to a specific value is repeated, so as to keep equalizing received signals.

As explained so far, the equalizer according to the present invention shift tap co-efficients adaptively according to a change in the position of a received signal. In this manner, the equalizer is able to converge tap coefficients at high speed even under CDM multipath channel environment where channel environment changes suddenly, thereby substantially enhancing the performances of a receiver using the equalizer.

Moreover, it is possible to change a shift amount of a tap coefficient in accordance with the degree of changes of a received signal, and this in turn increases the convergence speed of tap coefficients.

### Industrial Applicability

In conclusion, as the receiving system incorporating the equalizer of the present invention is able to adjust positions of tap coefficients depending on whether a received signal has moved or not, the tap coefficient convergence speed can be increased.

With the high-speed convergence of tap coefficients, the received system demonstrates improvement in the processing performances and speed.

While the present invention has been described with respect to the specific embodiments, it will be apparent to those skilled in the art that the present invention is defined and limited only by the scope of the appended claims.

## Claims

1. An equalizer in a receiving system, said equalizer comprising a tap coefficient update block (460) configured to determine a tap coefficient to compensate distortion and interference in a frequency profile of an input signal received by a tuner in said system, the equalizer further comprising:
an input signal position verification block (480) configured to verify a position change in said frequency profile of the received input signal between an input signal currently received by said tuner and an input signal previously received by said tuner; and
a coefficient position adjustment block (470) configured to shift a tap coefficient inputted from the tap coefficient update block (460) based on said position change, if the position of the frequency profile of the input signal has changed, wherein the shifted tap coefficient is used to compensate said distortion and interference by the equalizer; and the coefficient position adjustment block (470) is further configured not to shift said tap coefficient inputted from said tap coefficient update block (460) if it is determined that the position of the frequency profile of the received input signal has not changed.

2. An equalizer according to claim 1, wherein the coefficient position adjustment block (470) is configured to be driven per system clock.

3. An equalizer according to claim 1, wherein the coefficient position adjustment block (470) comprises:
a coefficient input means (4710) configured to receive a tap coefficient from the tap coefficient update block;
an input signal position decision means (4720) configured to receive the position change of the received signal from the input signal position verification block and to determine whether the position of the frequency profile of the received input signal is moved; and
a coefficient output means (4730) configured to output said tap coefficient either being shifted or not-shifted according to the determination result of the input signal position decision means.

4. An equalizer according to claim 3, wherein the coefficient position adjustment block (470) further comprises a period decision means (4750) configured to drive the coefficient position adjustment block (470) per predetermined time period.

5. An equalizing method in an equalizer in a receiving system, wherein said equalizer comprises a tap coefficient update block (460) determining a tap coefficient for compensating distortion and interference in a frequency profile of an input signal received by a tuner in said system, the method comprising the steps of:
a) converging a tap coefficient for equalizing said received input signal;
b) determining whether there is a change in position in the frequency profile of the received input signal between an input signal currently received by said tuner and an input signal previously received by said tuner
c) shifting the tap coefficient converged in the step a) based on said position change if it is determined in the step b) that the position of the frequency profile of the input signal has changed, wherein the shifted tap coefficient is used to compensate said distortion and interference; and
d) outputting the tap coefficient converged in the step a) without shifting if it is determined in the step b) that the position of frequency profile of the input signal has not changed.

6. An equalizing method according to claim 5, further comprising the step of verifying whether a predetermined time period has elapsed after performing the step a) and before performing the step b).

## Patentansprüche

1. Entzerrer in einem Empfangssystem, wobei der Entzerrer umfasst:
einen Abgriffkoeffizienten-Aktualisierungsblock (460), der so konfiguriert ist, dass er einen Abgriffkoeffizienten zum Kompensieren von Verzerrung und Interferenz in einem Frequenzprofil eines Eingangssignals bestimmt, das durch einen Tuner im System empfangen wird,
wobei der Entzerrer ferner umfasst:
einen Eingangssignalpositions-Verifizierungsblock (480), der so konfiguriert ist, dass er eine Positionsänderung im Frequenzprofil des empfangenen Eingangssignals zwischen einem Eingangssignal, das durch den Tuner gerade empfangen wird, und einem Eingangssignal verifiziert, das durch den Tuner früher empfangen wurde; und
einen Koeffizientenpositions-Anpassungsblock (470), der so konfiguriert ist, dass er einen Abgriffkoeffizienten, der vom Abgriffkoeffizienten-Aktualisierungsblock (460) eingegeben wird, basierend auf der Positionsänderung verschiebt, wenn sich die Position des Frequenzprofils des Eingangssignals geändert hat, wobei der verschobene Abgriffkoeffizient zum Kompensieren der Verzerrung und Interferenz durch den Entzerrer verwendet wird; und
der Koeffizientenpositions-Anpassungsblock (470) ferner so konfiguriert ist, dass er den vom Abgriffkoeffizienten-Aktualisierungsblock (460) eingegebenen Abgriffkoeffizienten nicht verschiebt, wenn bestimmt wird, dass sich die Position des Frequenzprofils des empfangenen Eingangssignals nicht geändert hat.

2. Entzerrer nach Anspruch 1, wobei der Koeffizientenpositions-Anpassungsblock (470) so konfiguriert ist, dass er pro Systemtakt angesteuert wird.

3. Entzerrer nach Anspruch 1, wobei der Koeffizientenpositions-Anpassungsblock (470) umfasst:
ein Koeffizienteneingabemittel (4710), das zum Empfangen eines Abgriffkoeffizienten vom Abgriffkoeffizienten-Aktualisierungsblock konfiguriert ist;
ein Eingangssignalpositions-Bestimmungsmittel (4720), das so konfiguriert ist, dass es die Positionsänderung des empfangenen Signals vom Eingangssignalpositions-Verifizierungsblock empfängt und bestimmt, ob sich die Position des Frequenzprofils des empfangenen Eingangssignals bewegt hat; und
ein Koeffizientenausgabemittel (4730), das so konfiguriert ist, dass es den gemäß dem Bestimmungsergebnis des Eingangssignalpositions-Bestimmungsmittels entweder verschobenen oder nicht verschobenen Abgriffkoeffizienten ausgibt.

4. Entzerrer nach Anspruch 3, wobei der Koeffizientenpositions-Anpassungsblock (470) ferner ein Dauerbestimmungsmittel (4750) umfasst, das so konfiguriert ist, dass es den Koeffizientenpositions-Anpassungsblock (470) pro vorbestimmter Zeitdauer ansteuert.

5. Entzerrungsverfahren in einem Entzerrer in einem Empfangssystem, wobei der Entzerrer einen Abgriffkoeffizienten-Aktualisierungsblock (460) umfasst, der einen Abgriffkoeffizienten zum Kompensieren von Verzerrung und Interferenz in einem Frequenzprofil eines Eingangssignals bestimmt, das durch einen Tuner im System empfangen wird,
wobei das Verfahren die folgenden Schritte umfasst:
a) Konvergieren eines Abgriffkoeffizienten zum Entzerren eines empfangenen Eingangssignals;
b) Bestimmen, ob eine Positionsänderung im Frequenzprofil des empfangenen Eingangssignals zwischen einem Eingangssignal, das durch den Tuner gerade empfangen wird, und einem Eingangssignal vorliegt, das durch den Tuner früher empfangen wurde;
c) Verschieben des in Schritt a) konvergierten Abgriffkoeffizienten basierend auf der Positionsänderung, wenn in Schritt b) bestimmt wird, dass sich die Position des Frequenzprofils des Eingangssignals geändert hat, wobei der verschobene Abgriffkoeffizient zum Kompensieren der Verzerrung und Interferenz verwendet wird; und
d) Ausgeben des in Schritt a) konvergierten Abgriffkoeffizienten ohne Verschieben, wenn in Schritt b) bestimmt wird, dass sich die Position des Frequenzprofils des Eingangssignals nicht geändert hat.

6. Entzerrungsverfahren nach Anspruch 5, ferner umfassend den Schritt des Verifizierens, ob eine vorbestimmte Zeitdauer nach dem Ausführen von Schritt a) und vor dem Ausführen von Schritt b) verstrichen ist.

## Revendications

1. Égaliseur dans un système récepteur, ledit égaliseur comprenant un bloc de mise à jour de coefficient de prise (460) configuré pour déterminer un coefficient de prise aux fins de compenser une distorsion et une interférence dans un profil de fréquence d'un signal d'entrée reçu par un syntoniseur dans ledit système, l'égaliseur comprenant en outre :
un bloc de vérification de position de signal d'entrée (480) configuré pour vérifier un changement de position dans ledit profil de fréquence du signal d'entrée reçu entre un signal d'entrée actuellement reçu par ledit syntoniseur et un signal d'entrée précédemment reçu par ledit syntoniseur ; et
un bloc d'ajustement de position de coefficient (470) configuré pour décaler un coefficient de prise appliqué en entrée par le bloc de mise à jour de coefficient de prise (460) en fonction dudit changement de position, si la position du profil de fréquence du signal d'entrée a changé, le coefficient de prise décalé servant à compenser ladite distorsion et ladite interférence par l'égaliseur ; et le bloc d'ajustement de position de coefficient (470) étant configuré en outre pour ne pas décaler ledit coefficient de prise appliqué en entrée par ledit bloc de mise à jour de coefficient de prise (460) s'il est déterminé que la position du profil de fréquence du signal d'entrée reçu n'a pas changé.

2. Égaliseur selon la revendication 1, dans lequel le bloc d'ajustement de position de coefficient (470) est configuré pour être piloté selon une horloge système.

3. Égaliseur selon la revendication 1, dans lequel le bloc d'ajustement de position de coefficient (470) comprend :
un moyen d'entrée de coefficient (4710) configuré pour recevoir un coefficient de prise depuis le bloc de mise à jour de coefficient de prise ;
un moyen de décision de position de signal d'entrée (4720) configuré pour recevoir le changement de position du signal reçu depuis le bloc de vérification de position de signal d'entrée et pour déterminer si la position du profil de fréquence du signal d'entrée reçu a bougé ; et
un moyen de sortie de coefficient (4730) configuré pour fournir en sortie ledit coefficient de prise, soit décalé, soit non décalé, selon le résultat de détermination du moyen de décision de position de signal d'entrée.

4. Égaliseur selon la revendication 3, dans lequel le bloc d'ajustement de position de coefficient (470) comprend en outre un moyen de décision de période (4750) configuré pour piloter le bloc d'ajustement de position de coefficient (470) selon un intervalle de temps prédéfini.

5. Procédé d'égalisation dans un égaliseur dans un système récepteur, ledit égaliseur comprenant un bloc de mise à jour de coefficient de prise (460) déterminant un coefficient de prise aux fins de compenser une distorsion et une interférence dans un profil de fréquence d'un signal d'entrée reçu par un syntoniseur dans ledit système, le procédé comprenant les étapes consistant à :
a) faire converger un coefficient de prise aux fins d'égaliser ledit signal d'entrée reçu ;
b) déterminer s'il y a un changement de position dans le profil de fréquence du signal d'entrée reçu entre un signal d'entrée actuellement reçu par ledit syntoniseur et un signal d'entrée précédemment reçu par ledit syntoniseur ;
c) décaler le coefficient de prise que l'on a fait converger à l'étape a) en fonction dudit changement de position s'il est déterminé à l'étape b) que la position du profile de fréquence du signal d'entrée a changé, le coefficient de prise décalé servant à compenser ladite distorsion et ladite interférence ; et
d) fournir en sortie le coefficient de prise que l'on a fait converger à l'étape a) sans le décaler s'il est déterminé à l'étape b) que la position du profil de fréquence du signal d'entrée n'a pas changé.

6. Procédé d'égalisation selon la revendication 5, comprenant en outre l'étape consistant à vérifier si un intervalle de temps prédéfini s'est écoulé suite à l'exécution de l'étape a) et avant l'exécution de l'étape b).
